# EUROPEAN PATENT APPLICATION

(11) **EP 1 152 357 A2**
(43) Date of publication of application: **07.11.2001**
(21) Application number: 01108926.5
(22) Date of filing: 10.04.2001
(51) Int. Cl.: G06F 17/60

(54) **Method, system and apparatus for effecting electronic commercial transactions**

(30) Priority: 14.04.2000 JP 2000113323
(71) Applicant: TOYOTA JIDOSHA KABUSHIKI KAISHA, Aichi-ken 471-8571 (JP)
(72) Inventor: Fujiwara, Yasuhisa, Toyota-shi, Aichi-ken 471-8571 (JP)
(74) Representative: Leson, Thomas Johannes Alois, Dipl.-Ing.

(57) **Abstract**

A method and system are provided for effecting electronic commercial transactions using a communication network. Item data specifying an item or items which a user wishes to purchase and user identification data comprising information relating to the user are transmitted from a user terminal to a server computer. The server computer is connected to a database of installation facilities. Based on the user identification data, the database is searched for one or more installation facilities that are convenient to the user. If one of these facilities is selected by the user, the system and method may effectuate purchase of the item(s), such as vehicle parts, and schedule delivery of the item(s) directly to the selected facility where the item(s) can be installed on a product, such as a vehicle. The system and method may also provide a reservation system that schedules an installation time for installation of the item(s) at the installation facility.

## Description

### BACKGROUND OF THE INVENTION

### 1. Field of Invention

The invention relates in general to a method, a system and an apparatus for effecting electronic commercial transactions, and more particularly to technologies for conducting commercial transactions for items, such as parts to be installed on automotive vehicles, through a communications network.

### 2. Description of Related Art

Conventionally, a user of an automotive vehicle who wants to purchase some parts to be installed on the vehicle visits a car dealer or local distributor, at which a searching system as disclosed in Japanese Patent Laid-open Publication No. 8-185410 is used to search the parts which are compatible with the user's vehicle. After the prices of the parts, the cost for installation of the parts on the vehicle, and the delivery time of the parts are presented to the user, the user concludes contracts with the car dealer, regarding the purchase and installation of the desired parts, and the dealer places a purchase order with a supplier for the desired parts.

However, the user is not able to know details of the parts compatible with the user's vehicle and the service charges for installation of the parts on the vehicle, until the user actually visits the car dealer. In this sense, it has not been easy for the vehicle user to purchase and install the desired parts on the vehicle. Even after the user concludes contacts with the dealer regarding the purchase and installation of the desired parts, the dealer may not be able to know the exact date of delivery of the parts from the parts supplier when placing a purchase order with the supplier, and thus cannot inform the user of the exact date and time of completion of the installation of the parts on the user' vehicle (e.g., the vehicle pick-up date), service charges required for installation of the desired parts, and other details relating to the purchase and installation of the desired parts.

In addition, the car dealer uses independent management systems for parts ordering and parts installation, and is not capable of efficiently responding to the user's inquiries relating to the date and time of completion of the parts installation and the installation cost of the parts, in a satisfactory manner. Thus, the conventional system employed by the car dealer does not provide satisfactory services in terms of the management of the time and cost of parts installation.

### SUMMARY OF THE INVENTION

It is therefore an object of the invention to provide a method or a system which permits a user of, for example, an automotive vehicle, to easily and reliably acquire data on items, such as automotive parts to be installed on the vehicle, through a communications network, and have the items installed on a desired object such as the automotive vehicle.

To accomplish at least part of the above object and/or other objects, the invention provides a method for effecting electronic commercial transactions using a communication network, comprising the steps of: (a) receiving item data and user identification data from a terminal at a server computer, the item data specifying at least one item which a user wishes to purchase, the user identification data comprising information relating to the user; (b) searching, based on at least the user identification data, for a facility at which the user is able to receive the at least one item and obtaining facility data based on the search; and (c) transmitting the obtained facility data from the server computer to the terminal.

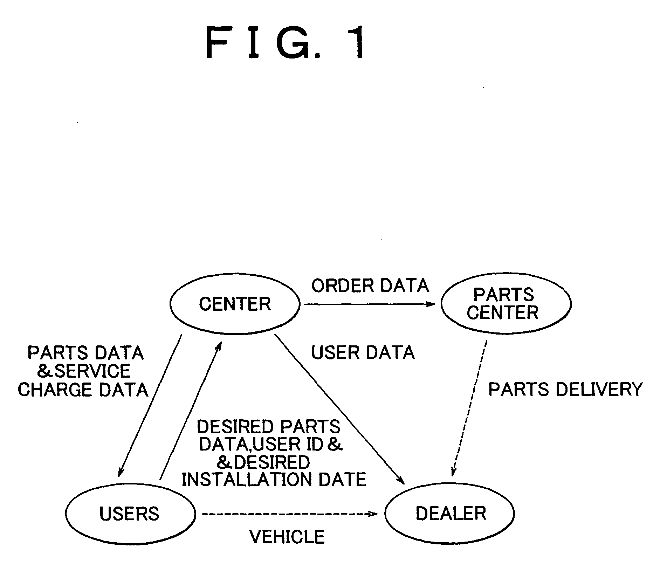

The invention is schematically shown in Fig. 1, wherein a center having a server computer stores parts data for each type of vehicle, and the center provides the user with the parts data in response to a request from the user. On the basis of the parts data displayed at the user terminal, the user selects desired parts to be purchased, such as automotive parts to be installed on an automotive vehicle of the user. This selection of desired parts data is transmitted to the center. The user also transmits his/her ID identifying the user to the center. Upon receipt of the desired parts data and the user's ID, the center searches for facilities which are available for installing the selected parts on the vehicle (e.g., automobile dealers that are located conveniently to the user for the installation of the selected parts), and transmits dealer data indicative of those dealers to the user. Usually, the service charges for installation of the parts by one automobile dealer are different from those for installation of the same parts by another dealer. In view of this, the center transmits to the user service charge data indicative of the service charges for installation of the selected parts as well as the dealer data. When the dealer data indicate a plurality of candidate dealers available for installing the selected parts, the user can select one of the candidate dealers. The user transmits to the center not only selected dealer data indicative of the selected dealer, but also desired installation date data indicative of the user's desired date of installation of the parts. On the basis of the desired parts data, the desired installation date data and the selected dealer data, the center transmits purchase order data to a parts center, and transmits, to the selected dealer, user data which include the desired parts data indicative of the selected parts and the desired installation date data indicative of the desired date of installation of the selected parts at the dealer. On the basis of the purchase order data and the user data, the parts center delivers the selected parts to the dealer before the desired installation date, and the dealer is informed of the desired installation date, prior to the installation date on which the user visits the dealer with the vehicle, for instance, to have the selected parts installed on the vehicle. This allows the dealer to install the selected parts on the vehicle with high efficiency. In the case of the automotive parts, for example, the selected parts can be installed on the vehicle at the dealer, on the date desired by the user, when the user visits the dealer with the vehicle on the desired date. Further, since the service charge data indicative of the cost for installing the desired parts on the vehicle are supplied to the user, the user is able to be aware of the total cost necessary to purchase and install the parts, before the purchase of the parts, so that the user can readily decide whether the parts are to be purchased.

Where the parts desired by the user are already in stock at the selected dealer, the dealer need not place a purchase order with the parts center, so that the communication with the parts center and the parts delivery from the parts center are not required.

The method and system according to the invention permit the user of the vehicle to not only purchase the desired parts to be installed on the vehicle, but also specify the desired dealer for installation of the parts, and the desired date of installation of the parts at the specified dealer. Thus, the present method and system are highly convenient to the user.

### BRIEF DESCRIPTION OF THE DRAWINGS

The invention will be described in conjunction with the following drawings in which like reference numerals designate like elements and wherein:
Fig. 1 is a view schematically showing the invention;
Fig. 2 is a schematic view illustrating one embodiment of the invention;
Fig. 3 is a block diagram illustrating an arrangement of a server computer shown in Fig. 2;
Fig. 4 is a block diagram illustrating one of the user terminals shown in Fig. 1;
Fig. 5 is a flowchart illustrating a processing routine for data transmitting operations performed in the embodiment of Fig. 2;
Fig. 6 is a view showing a screen display providing a list of vehicle models and years;
Fig. 7 is view showing a screen display of aerodynamics parts data;
Fig. 8 is a view showing an example of a screen display of detailed data displayed upon clicking a DETAILED INFO button on the display of Fig. 7;
Fig. 9 is a view showing an example of a screen display providing a list of parts displayed by an operation on the display of Fig. 7;
Fig. 10 is a view showing a screen display of data of another type of parts;
Fig. 11 is a view showing an example of a screen display for entering user ID;
Fig. 12 is a view indicating an example of a screen display providing a list of car dealers; and
Fig. 13 is a view showing an example of detailed data of a selected dealer.

### DETAILED DESCRIPTION OF PREFERRED EMBODIMENTS

Referring to the accompanying drawings, there will be described various embodiments of this invention as applied to a case where a user of an automotive vehicle purchases a part or parts, which is/are installed on the vehicle at a car dealer or local vehicle distributor.

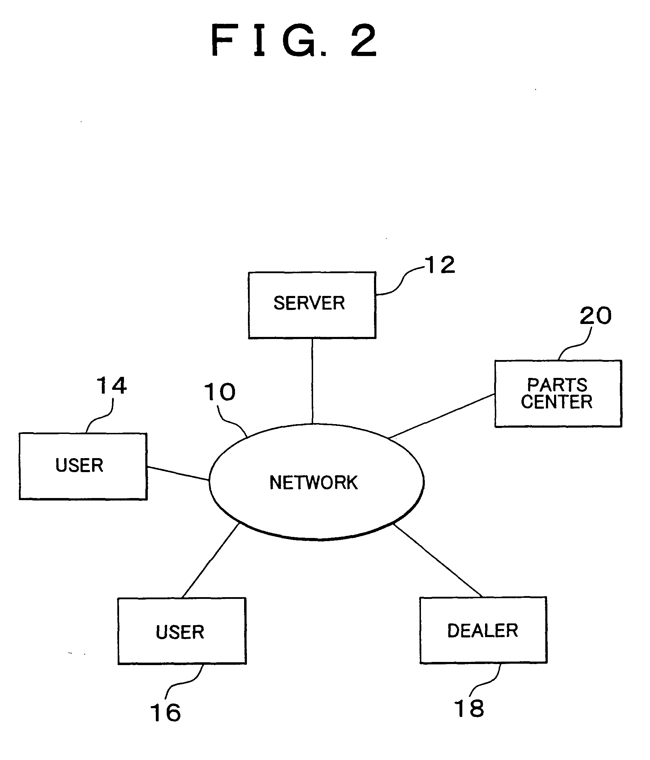

Fig. 2 illustrates an electronic transaction system arranged according to a first embodiment of this invention. This system is a server-client system including a communications network 10, and a server computer 12, user terminals 14, 16, dealer terminals 18 and a parts center terminal 20, which are interconnected via the communications network 10. The user terminals 14, 16, dealer terminals 18 and parts center terminal 20 are hereinafter referred to simply as "users 14, 16," "dealers 18" and "parts center 20," respectively, where appropriate. The server computer 12 stores, in a memory, parts data supplied from the parts center terminal 20 and the dealer terminals 18, and dealer data (vehicle model data indicative of vehicle models available from the dealer, and service charge data indicative of service charges for installing various parts) supplied from the dealer terminals 18. For instance, the parts data and dealer data are stored in a web page format described in HTML, so that the server computer 12 can transmit appropriate web pages through the network 10 to the user terminals 14, 16, in response to specific requests from the user terminals 14, 16. Each user terminal 14, 16 has a display portion adapted to display the supplied parts data in the web page format, using, for example, a World-Wide Web (WWW) browser. The user specifies a desired part or parts to be installed on a vehicle of the user, while viewing the parts data displayed on the display portion of the terminal 14, 16, and supplies that information to the server computer 12.

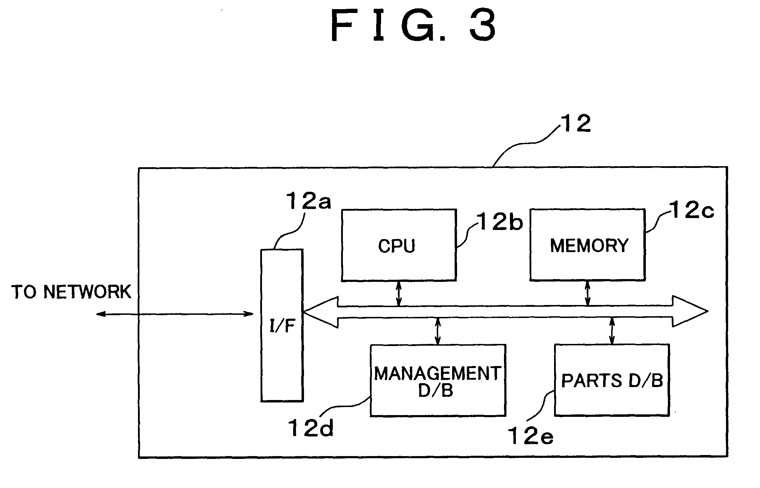

The server computer 12 which has received data indicative of the parts desired by the user searches a dealer-list database to find out a car dealer or dealers which is/are located conveniently to install the desired parts on the vehicle, for example, a dealer(s) which is/are located near the address of the user. In order to acquire address data of the user, the server computer 12 may request the user to enter ID when using this system, and specifies the user's address data based on the ID transmitted from the user terminals 14, 16, for example. Where a plurality of dealers are available for installation of the desired parts on the user's vehicle, the server computer 12 transmits to the user terminal 14, 16 dealer data associated with the plurality of dealers. More specifically, name and address data indicative of the names and addresses of those dealers are provided so that a list of the names and addresses of the dealers available for parts installation is displayed on the user terminal 14, 16. The user can select one of these dealers on the basis of the displayed list. Although the user who has been already registered as a member of this transaction system is able to specify the user's address by simply entering his/her ID as described above, the user who has not been registered, i.e., a new member in this system, is requested to enter his/her name and address so that the server computer 12 can find a convenient dealer or dealers on the basis of the address. In searching for a suitable dealer or dealers, the server computer 12 may use private information associated with the user other than the residence (home address) of the user, which information may include the user's work address, commuter route, and the address of a given place or places specified by the user. These data may be included in personal data which are transmitted from the user terminal 14, 16 to the server computer 12 and stored in a management database 12d (which will be described later in Fig. 3) in association with the user ID. Thus, the dealers to be searched are not necessarily located near the residence of the user. Further, the user need not select one of the candidate dealers represented by the dealer data supplied from the server computer 12, but may designate a dealer desired by the user. In this case, the user may be given an option to inhibit the server computer 12 from transmitting to the user terminal 14, 16 the dealer data indicative of a list of the candidate dealers. When the user selects or designates the desired dealer, the user provides the server computer 12 with a desired installation date on which the part or parts is/are to be installed at the selected or designated dealer. The desired installation date may be specified on a daily basis, preferably, on a day-and-o'clock basis. Namely, the date and time of parts installation may be preferably specified.

When the user transmits information on the selected or designated dealer to the server computer 12, the server computer 12 transmits, to the parts center terminal 20, purchase order data in the form of parts data indicative of the parts desired by the user, and dealer data indicative of the dealer at which the parts are to be installed on the user's vehicle. Then, the parts center 20 delivers the parts in question to the specified dealer 18, according to the purchase order data supplied from the server computer 12. Also, the server computer 12 transmits the parts data and the user data to the dealer terminal 18 specified by the user. The user data include vehicle data indicative of the specifications of the vehicle which the user intends to bring to the specified dealer 18, and desired installation date data indicative of the desired date (and, preferably, hour) on which the parts are to be installed on the vehicle.

Thus, the user 14, 16 transmits to the server computer 12 the user identification data identifying the user, the vehicle data indicative of the specifications of the user's vehicle, the parts data indicative of the desired parts to be installed, the desired installation date data indicative of the date (and preferably hour) of installation of the parts, and the dealer data indicative of the dealer 18 at which the parts are to be installed. Then, the user 14, 16 takes the vehicle to the specified dealer 18. At the dealer 18, which has already received from the server computer 12 the vehicle data, parts data, etc. and the desired parts, these parts can be promptly installed on the vehicle.

It is desirable that after or before receiving the parts, the dealer 18 send an electronic mail, or the like, to the user 14, 16 to confirm that the user 14, 16 has placed the order in question. The content of such a mail preferably includes the vehicle data, parts data, installation date data, and price data indicative of the parts cost and a service charge for installing the parts on the vehicle.

The block diagram of Fig. 3 illustrates an arrangement of the server computer 12. The server computer 12 incorporates an interface (I/F) 12a for connection with the communications network 10, a central processing unit (CPU) 12b, a memory 12c, the above-indicated management database (management D/B) 12d, and a parts database (parts D/B) 12e. The memory 12c includes a read-only memory (ROM), a random-access memory (RAM), a hard disc and the like. The management database 12d stores user data relating to the users 14, 16 registered for electronic transactions through the server-client system, dealer data relating to the car dealers 18, and parts center data relating to the parts center 20. The parts database 12e stores parts data associated with automotive parts installed on various vehicles.

The user personal data stored in the management database 12d may include, for example, the user ID, name and address, and the number of a credit card used by the user for payment. The parts data stored in the parts database 12e may include, for example, data transmitted from the parts center 20 and data transmitted from the dealers 18. It is preferable that the parts data are stored in the form of a table, which lists the parts in association with the type of vehicles to which the parts can be installed. The parts data further includes prices of the parts. When the CPU 12b receives vehicle data, more specifically, data indicative of the model and year of the user's vehicle, from the user terminal 14, 16, the CPU 12b searches the parts database 12e to find parts that match the model and year of the user's vehicle, and transmits to the user terminal 14, 16 parts data indicative of the matching parts. When the CPU 12b receives parts data from the user terminal 14, 16 indicative of parts to be installed on the vehicle, the CPU 12b searches the management database 12d to find the dealers 18 which are capable of installing the user-specified parts on the vehicle, and transmits dealer data listing such dealers 18 to the user terminal 14, 16. The dealers capable of installing the parts on the vehicle are equivalent to dealers that usually deal with (sell and/or service) the model (type) of the vehicle on which the parts are to be installed. In this respect, the dealer data stored in the management database 12d preferably include data indicative of the vehicle models which the dealers 18 normally handle.

In searching the management database 12d to find out the candidate dealers 18, the CPU 12b uses the user ID stored in the database 12d. Described in detail, the CPU 12b reads, from the management database 12d, the residence (home address) of the user (or other addresses specified by the user such as a work address, commuter route, or other place specified by the user), and selects the candidate dealers 18 from the management database 12d. This arrangement prevents an undesirable nomination of dealers which are inconvenient to the user, for example, dealers that are distant from the user. When there are a plurality of candidate dealers 18 that meet the conditions (in terms of the location and the types of vehicles handled, for example), the user terminal 14, 16 is informed of all of these candidate dealers 18. When the user 14, 16 selects one of the candidate dealers 18, the CPU 12b transmits the parts data and the selected dealer data to the parts center 20, and also transmits the user data to the selected dealer 18.

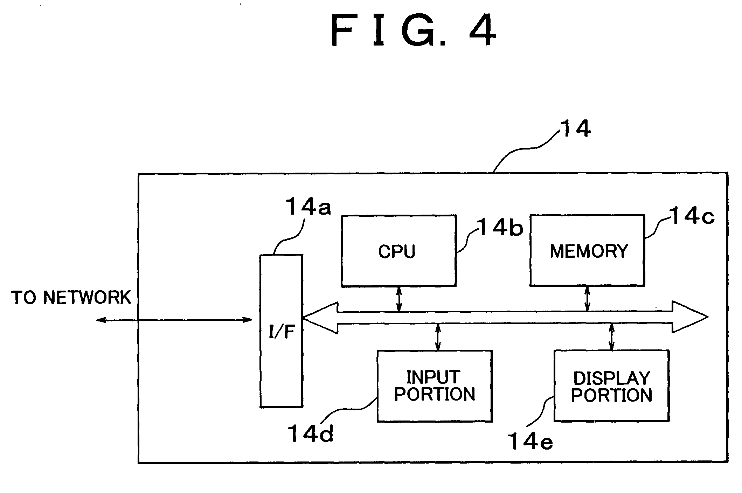

The arrangement of an exemplary user terminal 14 is illustrated in the block diagram of Fig. 4. The user terminal 16 is identical in arrangement with the user terminal 14 and thus its detailed description is omitted. The user terminal 14 includes an interface (I/F) 14a for connection with the communications network 10, a central processing unit (CPU) 14b, a memory 14c, an input portion 14d and a display portion 14e. The input portion 14d may include, for instance, a keyboard or touch switches used for entering vehicle model and year data indicative of the model and year of the vehicle on which the desired parts are to be installed. The input portion 14d is further used for specifying the desired parts, and for entering the user ID and the desired installation date (and, preferably, time). These various kinds of data entered through the input portion 14d are transmitted from the user terminal 14 through the communications network 10 to the server computer 12. The display portion 14e, which can be any conventional or subsequently developed display such as a cathode ray tube or a liquid crystal display, is provided to display various kinds of data such as the parts data and the dealer data which are supplied from the server computer 12. The parts data preferably include image data for displaying images of the parts, and the image data preferably include vehicle image data used for displaying a vehicle on which the parts desired by the user are actually installed.

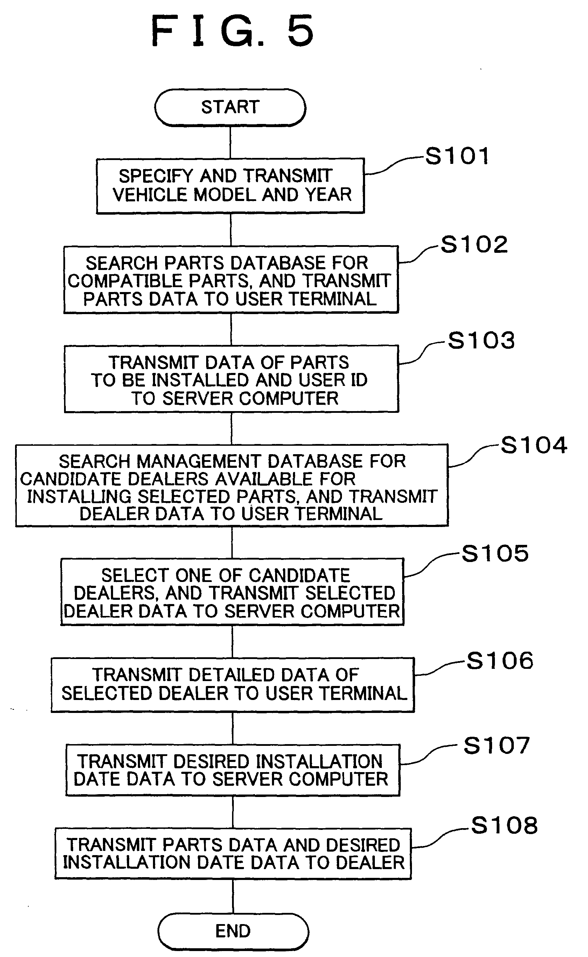

The flow chart of Fig. 5 shows a processing routine for data transmitting operations in the server-client system of this embodiment. The routine is initiated with step S101 in which the user specifies the model type and year of the user's vehicle, through the user terminal 14 (or user terminal 16), so that the vehicle model and year data are transmitted to the server computer 12. The server computer 12 is desirably arranged to provide the user terminal 14 with a list of the models and years of vehicles on which certain parts can be installed, so that the user can easily specify the model and year of his/her vehicle from the list. For instance, the display portion 14a displays a list of vehicle models and years in the web page format, so that the user specifies, by clicking, the model and year of the vehicle on which the desired parts are to be installed. The vehicle model and year data indicative of the specified model and year are then transmitted from the user terminal 14 to the server computer 12.

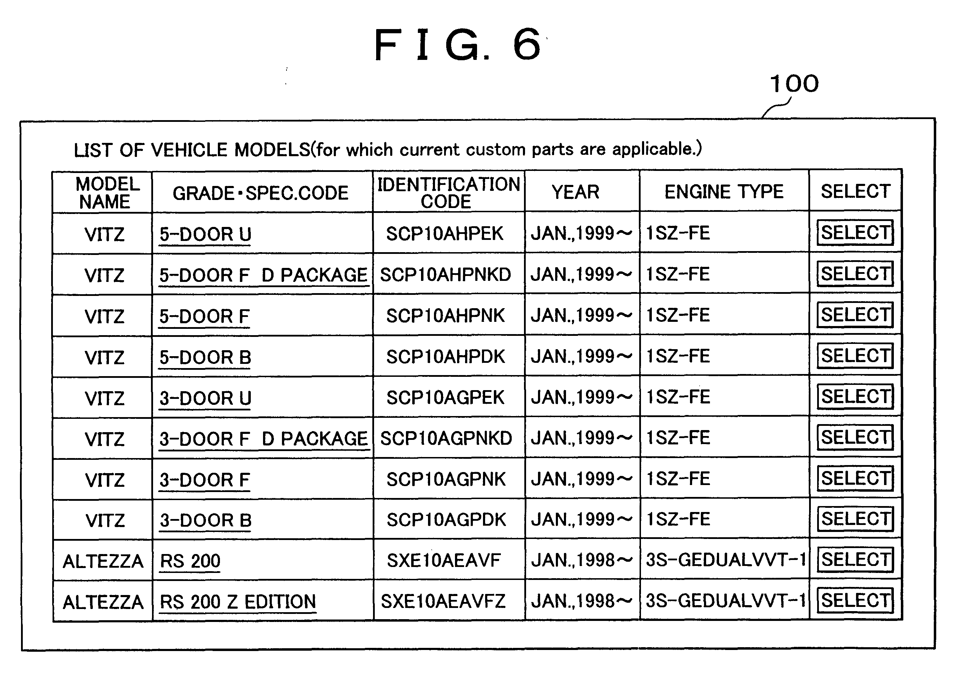

Fig. 6 shows a screen display 100 provided on the display portion 14e of the user terminal 14. The screen display 100 provides a list of vehicle models and years. More specifically, the list includes the model name, grade, spec code, identification code, year, and engine type of each vehicle model, for which a selector button "SELECT" is also provided. The user can transmit the model and year of his/her own vehicle to the server computer 12, by selecting and clicking the selector button corresponding to the model of his/her own vehicle.

When the server computer 12 receives the above-described vehicle data from the user terminal 12, the control flow advances to step S102 in Fig. 5, in which the server computer 12 searches the parts database 12e to find out the parts which are compatible with the vehicle model and year received from the user terminal 12, and transmits parts data indicative of the compatible parts, to the user terminal 14.

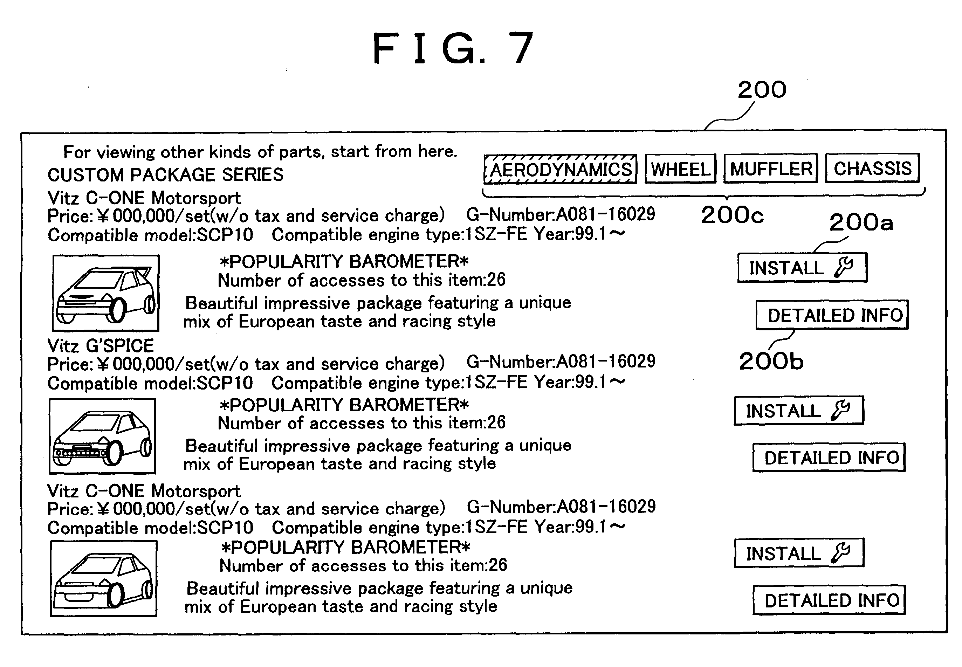

Fig. 7 shows a screen display 200 provided on the display portion 14e of the user terminal 14. The screen display 200 shows so-called "aerodynamics parts," and provides images of the external appearance of the vehicle when different packages of aerodynamics parts are installed on the vehicle. The screen display 200 also include descriptions or explanations of the respective packages of aerodynamics parts, and provides selector buttons 200a. In Fig. 7, the selector buttons 200a are labeled "INSTALL". Buttons 200b labeled "DETAILED INFO" are provided corresponding to the selector buttons 200a. When the user wishes to have detailed information or data on a selected one of the aerodynamics packages, the user clicks the corresponding button 200b so that detailed data indicative of the details of the selected package of aerodynamics parts are transmitted from the server computer 12 to the user terminal 14, and are displayed on the screen of the display portion 14e.

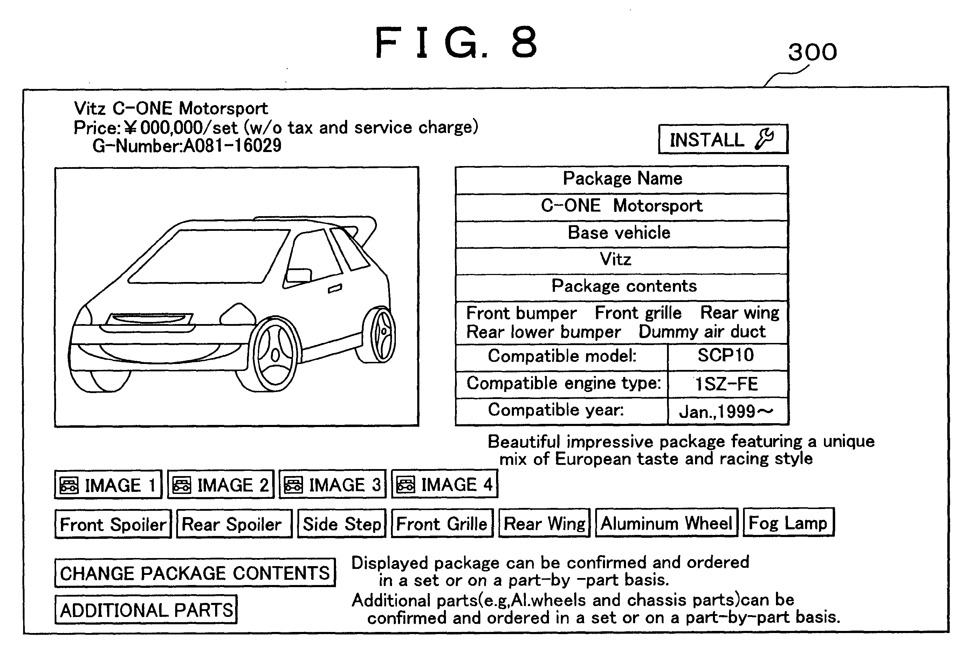

Fig. 8 shows an example of a screen display 300 providing the details of the selected package of aerodynamics parts. The screen display 300 includes an image of the appearance of the vehicle, the name of the aerodynamics parts package, and descriptions of the package. The screen display 300 also includes a plurality of image selector buttons for selecting respective different images of the vehicle as viewed in respective different directions. When the user clicks the image selector button "IMAGE 1," for example, the server computer 12 transmits to the user server 14 image data representative of an image of the appearance of the vehicle as viewed in a direction from the front left toward the rear right position of the vehicle, and this image is provided on the screen display 300 on the display portion 14e. The screen display 300 also includes selector buttons for highlighting respective aerodynamics parts of the package. When the front spoiler selector button is pressed by clicking, the front spoiler as installed on the vehicle is highlighted in the displayed vehicle image. By pressing those selector buttons for highlighting the desired aerodynamics parts, the user can easily check the appearance and performance of the vehicle with the desired aerodynamics parts installed thereon. Thus, the vehicle image with the selective highlighting of the parts provided in the screen display 300 is helpful to the user in determining which parts are to be selected for installation.

Where the user desires to change the contents of the aerodynamics parts package, the user clicks a button labeled "CHANGE PACKAGE CONTENTS" so that the server computer 12 transmits to the user terminal 14 package data representative of a list of the aerodynamics parts included in the selected package, and the list is displayed on the screen of the display portion 14e.

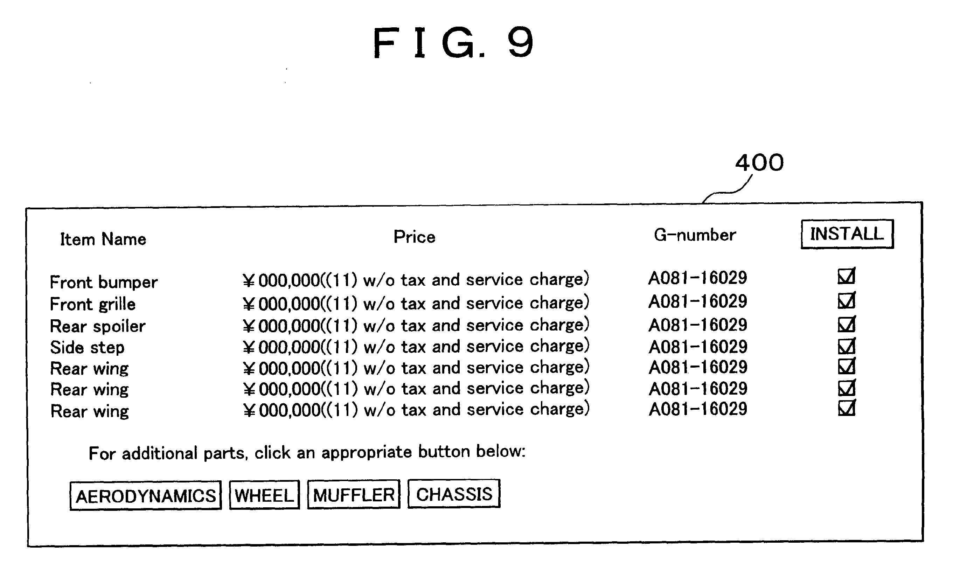

Fig. 9 shows a screen display 400 providing such a list of the aerodynamics parts included in the selected package. The screen display 400 includes the names and prices of the respective parts, and selector buttons for indicating a determination as to whether each part is to be installed on the vehicle. If the user does not wish to have the front bumper installed, the user turns off the corresponding selector button to exclude the front bumper from the selected package.

When the user desires to install parts other than the aerodynamics parts on the vehicle, the user clicks an appropriate one of selector buttons 200c provided in the screen display 200 of Fig. 7. Where the user clicks the selector button 200c labeled, for example, "WHEEL," the server computer 12 searches the parts data base 12e to find out wheels compatible with the user's vehicle, and transmits wheel data indicative of these wheels to the user terminal 14.

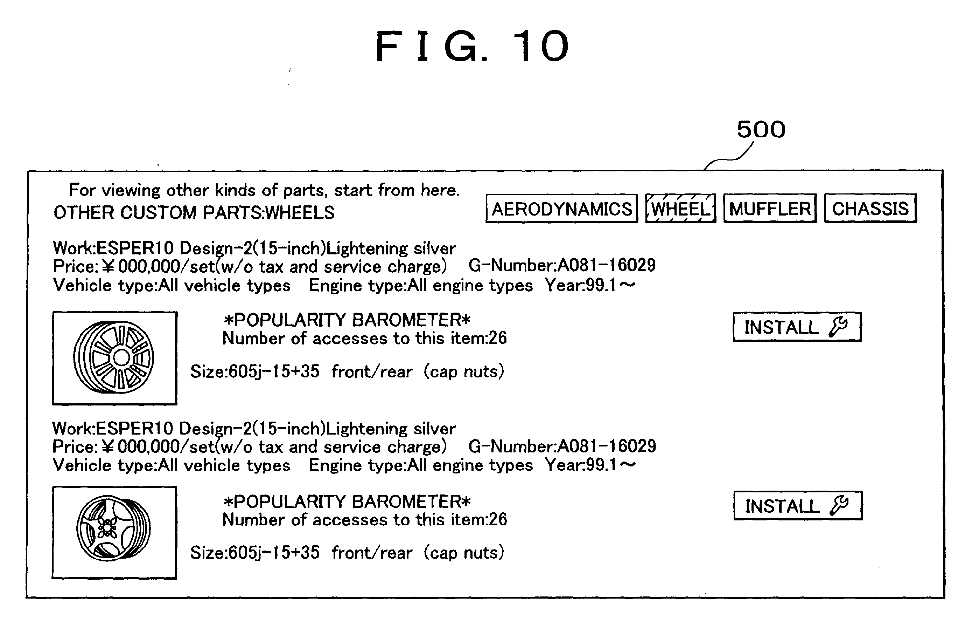

Fig. 10 shows a screen display 500 provided on the display portion 14e of the user terminal 14 according to the wheel data received from the server computer 12. Like the screen display 300 showing the aerodynamics parts package, the screen display 500 includes images of the wheels, and selector buttons labeled "INSTALL." With the screen display 500 thus provided, the user selects one of the wheels displayed, and clicks the corresponding selector button thereby to transmit purchase order data to the server computer 12.

Referring back to the flow chart of Fig. 5, the parts compatible with the specific user's vehicle are displayed at the user terminal 14 in step S102 according to the parts data received from the server computer 12. Step S102 is followed by step S103 in which the user selects the parts (package) to be installed on the vehicle, and enters the user's own ID so that the parts data and the user ID are transmitted from the user terminal 14 to the server computer 12. The user ID may be entered before step S101 is executed.

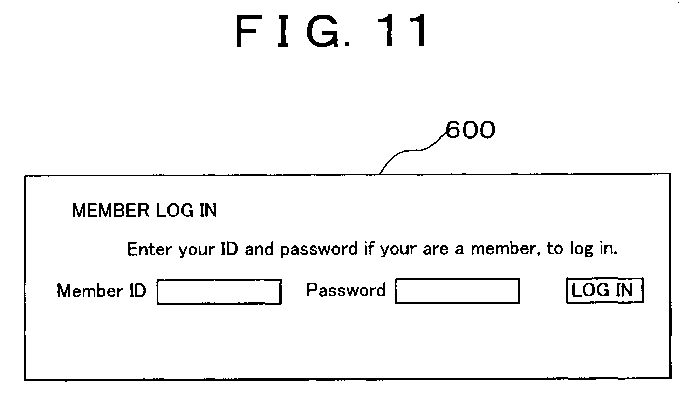

Fig. 11 shows a screen display 600 that permits the user to enter the user ID. Namely, the user enters a membership ID and a password of the user, and clicks a button labeled "log in". As a result, the user ID is transmitted to the server computer 12. The server computer 12 may allocate IDs (which may or may not include passwords) to the respective users upon membership registration, for example. On the basis of the user ID received from the user terminal 14, the server computer 12 searches the management database 12d for the address of the user, namely, the location of the vehicle on which the parts are to be installed. It is noted that the screen display 600 may be given in the initial stage in which the user gains access to the server computer 12.

After the parts data and the user ID are transmitted to the server computer 12, step S104 is executed in which the server computer 12 searches the management database 14d to find a candidate dealer or dealers available for installing the parts selected by the user, and transmits dealer data indicative of the candidate dealer(s) to the user terminal 14. Described in detail, the server computer 12 searches for a car dealer or dealers which is/are available for installing the selected parts on the user's vehicle and is/are also located conveniently to the user, for instance, the dealer(s) located near the residence of the user. Where two or more dealers are found as candidates, dealer data indicative of all of these candidates are transmitted to the user terminal 14.

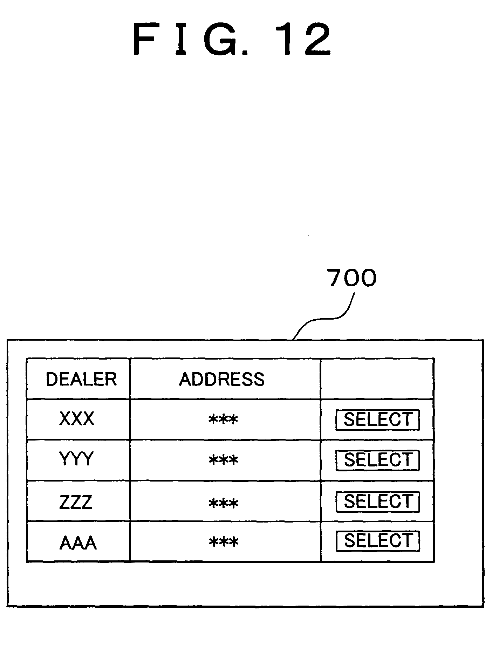

Fig. 12 shows a screen display 700 provided on the display portion 14e of the user terminal 14 when the dealer data are received from the server computer 12. The screen display 700 provides a list of the candidate car dealers, which includes the names and addresses of the dealers, and selector buttons labeled "SELECT." The user selects the most convenient or suitable one of the candidate dealers which are all available for installing the selected parts on the user's vehicle and are located near the residence of the user.

When one of the candidate dealers is selected in the screen display 700 of Fig. 12, selected dealer data indicative of the selected dealer are transmitted in step S105 from the user terminal 14 to the server computer 12. Step S105 is followed by step S106 in which the server computer 12 transmits to the user terminal 14 detailed dealer data indicating the details of the selected dealer 18, so that the detailed dealer data are displayed at the user terminal 14.

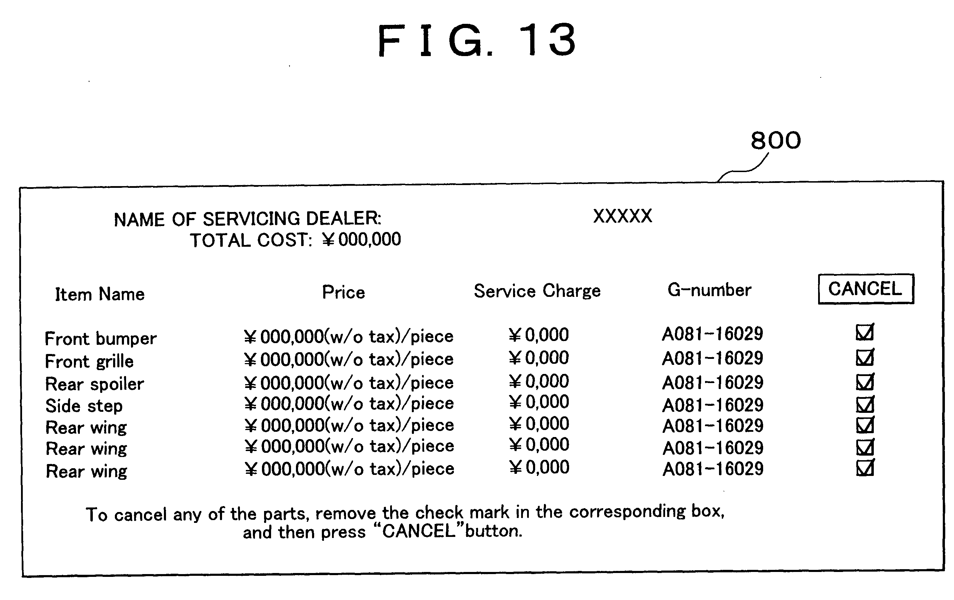

Fig. 13 shows a screen display 800 provided at the user terminal 14 when the selected dealer data are received from the server computer 12. The screen display 800 includes the name of the selected dealer, and a list of the parts to be installed on the user's vehicle, and service charges required to install the respective parts, as well as the prices of the parts. The service charges are represented by service charge data included in the management database 12d. The service charge data have been transmitted from the individual dealers to the server computer 12. The screen display 800 including the service charges for installation of the parts as well as the prices of the parts permits the user to easily recognize the total cost for purchasing and installing the desired parts. Furthermore, the screen display 800 including the price and service charge for each of the selected parts is useful for the user to make a final decision on the parts to be purchased, in view of the intended budget of the user. Where the user wants to cancel any of the selected parts, as a result of consideration of the prices and service charges of the parts, the user may click or otherwise select an appropriate cancel button or buttons labeled "CANCEL."

In the embodiment of Fig. 5, the screen display 800 including the service charge data is provided in step S106 after one of the candidate dealers has been selected in step S105. However, the service charge data may be provided in step S104 when the list of the candidate dealers is displayed. In this case, the service charge data are displayed for each of the candidate dealers, so that the service charges of the two or more candidates are taken into consideration in selecting one of the candidates for installing the parts.

After the dealer for installing the parts and the parts to be installed are finally determined and selected, the process proceeds to step S107 in which the user specifies a desired date on which the selected parts are to be installed at the selected dealer, so that the desired installation date data are transmitted to the server computer 12. The transmission of the desired installation date data to the server computer 12 means reservation for the installation of the selected parts at the selected dealer. However, the server computer 12 may determine the candidate installation dates at the selected dealer and inform the user of those candidate installation dates, so that the user may select one of the candidate installation dates. It is desirable to permit the user to specify the desired time of the desired day. It is also desirable that the screen display 800 provide the time (duration) required for the selected dealer to install the parts on the vehicle. This arrangement is convenient to the user in estimating the time when the user must bring in the vehicle, for instance.

After receiving the parts data, dealer data and desired installation date data, the sever computer 12 transmits these sets of data to the selected dealer 18 in step S108, so that the dealer 18 is informed in advance of the scheduled installation prior to the date of the actual installation. This permits the dealer 18 to readily schedule the installation works, for improved efficiency of the installation.

Preferably, the payment for the purchase and installation of the selected parts is effected through the communications network 10. For instance, when the parts data indicative of the selected parts and the dealer data indicative of the selected dealer are transmitted from the user terminal 14 to the server computer 12, the user terminal 14 may shift to a screen display for the payment or settlement. The payment may be made by using the credit card of the user, the number of which is stored in the management database 12d of the server computer 12. If desired, the user may pay the cost in cash upon completion of the parts installation at the dealer.

It will be understood from the foregoing description of the embodiment of the invention that the present server-client system permits the user to perform on-line operations at the user terminal 14, for easily selecting the desired parts to be installed on the vehicle of the user, specifying the desired dealer 18 for installation of the parts, and making a reservation for the installation on a desired date. This server-client system eliminates the conventional need for the user to bring the vehicle in to a plurality of dealers for checking the availability of the desired parts and negotiating with the dealers for the installation of the parts. Thus, the present system assures efficient and easy selection of the desired parts and reliable installation of the desired parts at the desired dealer on the desired date.

Further, the present server-client system provides the users upfront with the service charges for the installation at the selected dealer 18, so that the user may know the required total cost including the service charges, before the user makes a final determination regarding the purchase of the desired parts. This arrangement assures an improved ease on the side of the user.

While the preferred embodiment of this invention has been described above, it is to be understood that the invention is not limited to the details of the illustrated embodiment, but may be embodied with various changes and modifications without departing from the spirit and scope of this invention. For instance, while the illustrated embodiment is arranged to provide the server computer 12 with the desired installation date after the desired dealer is specified by the user, it is possible to provide the server computer 12 with the desired installation date before the desired dealer is specified. In this case, the server computer 12 searches the management database 12d to find out the dealers which are available for installing the specified parts on the specified date and which are located, e.g., near the residence of the user, and the dealer data indicative of these dealers are transmitted to the user terminal 14. To this end, the management database 14d may include work load data indicative of the work loads of the individual dealers, so that the server computer 14 can check if the installation on the date desired by the user is possible at the specified dealer.

Each of the terminals included in the system of the above embodiment may of course be a personal computer, but may also be a cellular or portable telephone, a PDA (personal digital assistant), or any other device having data entering, displaying and processing functions.

Although the server-client system of the illustrated embodiment is adapted for electronic commercial transactions of parts to be installed on automotive vehicles, the principle of the invention is equally applicable to any other items or products in commerce.

As described above, the system according to the invention permits the users to acquire the desired items at the desired place or location. Further, the present system permits reservation for installation of desired vehicle parts at the desired place, as well as purchasing of the parts, assuring orderly arrangement for improved efficiency of the installation. In addition, the present system permits the users to know the total cost including the cost for the installation of the parts, before the users have to make decisions as to whether the parts are to be purchased, so that the users feel easy upon purchasing the parts.

A method and system are provided for effecting electronic commercial transactions using a communication network. Item data specifying an item or items which a user wishes to purchase and user identification data comprising information relating to the user are transmitted from a user terminal to a server computer. The server computer is connected to a database of installation facilities. Based on the user identification data, the database is searched for one or more installation facilities that are convenient to the user. If one of these facilities is selected by the user, the system and method may effectuate purchase of the item(s), such as vehicle parts, and schedule delivery of the item(s) directly to the selected facility where the item(s) can be installed on a product, such as a vehicle. The system and method may also provide a reservation system that schedules an installation time for installation of the item(s) at the installation facility.

## Claims

1. A method for effecting electronic commercial transactions using a communication network (10), comprising the steps of:
receiving item data and user identification data from a terminal (14, 16) at a server computer (12), the item data specifying at least one item which a user (14, 16) wishes to purchase, the user identification data comprising information relating to the user;
searching, based on at least the user identification data, for a facility (18) at which the user is able to receive the at least one item and obtaining facility data based on the search; and
transmitting the obtained facility data from the server computer (12) to the terminal (14, 16).

2. A method according to claim 1, wherein the item data comprises parts data specifying at least one part that can be installed on a vehicle associated with the user, and wherein the facility (18) is an installation facility at which the at least one part can be installed on the vehicle.

3. A method according to claim 2, further comprising the step of transmitting, from the server computer (12) to the terminal (14, 16), image data representing an image of the vehicle showing the at least one part installed.

4. A method according to claim 2 or 3, further comprising the step of transmitting to the terminal (14, 16) information relating to installation of the at least one part at the facility (18).

5. A method for effecting electronic commercial transactions for at least one part to be installed on a vehicle, using a communication network (10), comprising the steps of:
receiving at a server computer (12), vehicle data from a terminal (14, 16) comprising information relating to the vehicle on which the at least one part is to be installed;
searching, at the server computer, for matching parts data representing parts that are compatible with the vehicle;
transmitting the matching parts data from the server computer to the terminal where the parts data can be displayed;
receiving a selection of desired parts data at the server computer from the terminal, the desired parts data representing at least one desired part which is selected based on the matching parts data and is requested by a user to be installed on the vehicle;
searching, at the server computer, for at least one candidate facility at which the at least one desired part can be installed on the vehicle, to obtain installation facility data;
transmitting the installation facility data to the terminal for display; and
receiving at the server computer data from the terminal indicative of a desired facility and a desired installation date, the desired facility being selected from the at least one candidate facility represented by the installation facility data.

6. A method for effecting electronic commercial transactions for at least one part to be installed on a vehicle, using a communication network (10), comprising the steps of:
receiving at a server computer (12), vehicle data from a terminal (14, 16) comprising information relating to the vehicle on which the at least one part is to be installed;
searching, at the server computer, for matching parts data representing parts that are compatible with the vehicle;
transmitting the matching parts data from the server computer to the terminal where the parts data can be displayed;
receiving a selection of desired parts data at the server computer from the terminal, the desired parts data representing at least one desired part which is selected based on the matching parts data and is requested by a user to be installed on the vehicle on a user-designated installation date;
searching, at the server computer, for at least one candidate facility at which the at least one desired part can be installed on the vehicle on the user-designated installation date, to provide installation facility data;
transmitting the installation facility data to the terminal for display; and
receiving at the server computer data from the terminal indicative of a desired facility, the desired facility being selected from the at least one candidate facility represented by the facility data.

7. A system for effecting electronic commercial transactions for parts to be installed on a vehicle associated with a user, using a communication network (10), comprising:
a server computer (12) connected to a communication network (10), the server computer including
input means (12a) for receiving vehicle data information relating to the vehicle and user data information relating to the user,
a database (12d, 12e) containing vehicle part data and installation facility data,
search means (12b) for searching the database for vehicle part data that matches the received vehicle data information,
search means (12b) for searching the database for installation facilities that are located convenient to the user based on the received user data information,
output means (12a) for transmitting data indicative of matching parts and at least one convenient installation facility, and
input means (12a) for receiving data from a terminal pertaining to one or more selected parts and an installation reservation for installation of the one or more selected parts.

8. An apparatus for effecting electronic commercial transactions for parts to be installed on a vehicle associated with a user, using a computer network (10), comprising:
first storage means (12e) for storing parts data;
second storage means (12d) for storing facility data;
means for searching the first storage means for compatible parts data indicative of at least one part that is compatible with the vehicle, based on vehicle data comprising information relating to the vehicle;
means for searching the second storage means for desirable facility data indicative of a facility that is located convenient to the user, based on the vehicle data and user data comprising information relating to the user;
means for transmitting the compatible parts data and the desirable facility data to a user terminal; and
means for transmitting the compatible parts data and the user data to the facility represented by the desirable facility data.

9. A method for effecting electronic commercial transactions, using a communication network, comprising the steps of:
creating job management information and identifying a user (14, 16) in response to an access from a user;
searching a database storing product data and parts data for information relating to at least one part for which a search request is made by the user, and presenting the information to the user;
receiving, from the user, at least one of a purchase request for at least one part and a reservation for installation of the at least one part on a product that is associated with the user;
providing a first party (20, 18) that owns the at least one part for which the purchase request has been made, with information needed for producing or selecting the at least one part, the information being created based on the purchase request and the job management information; and
providing a second party (18) that is able to install the at least one part on the product associated with the user, with information that is created based on the reservation for installation and the job management information.

10. A system for effecting electronic commercial transactions, using a communication network, comprising:
means for creating job management information and identifying a user (14, 16) in response to an access from a user;
means for receiving a search request for at least one part from the user;
means for searching a database storing product data and parts data for information relating to the at least one part for which the search request has been made, and presenting the information to the user;
means for receiving, from the user, at least one of a purchase request for at least one part and a reservation for installation of the at least one part on a product that is associated with the user;
means for providing a first party (20, 18) that owns the at least one part for which the purchase request has been made, with information needed for producing or selecting the at least one part, the information being created based on the purchase request and the job management information; and
providing a second party (18) that is able to install the at least one part on the product associated with the user, with information that is created based on the reservation for installation and the job management information.

11. A method for effecting electronic commercial transactions for at least one part to be installed on a vehicle, using a communication network, comprising the steps of:
receiving at a server computer, vehicle data from a terminal comprising information relating to the vehicle on which the at least one part is to be installed;
searching, at the server computer, for matching parts data representing parts that are compatible with the vehicle;
transmitting the matching parts data from the server computer to the terminal where the parts data can be displayed;
receiving a selection of desired parts data at the server computer from the terminal, the desired parts data representing at least one desired part which is selected based on the matching parts data and is requested by a user to be installed on the vehicle;
searching, at the server computer, for at least one candidate facility at which the at least one desired part can be installed on the vehicle, to obtain installation facility data;
transmitting the installation facility data to the terminal for display;
receiving at the server computer data from the terminal indicative of a desired facility that is selected from the at least one candidate facility represented by the installation facility data; and
transmitting a service charge or an installation cost required for installing the at least one desired part on the vehicle, to the terminal for display.

12. A system for effecting electronic commercial transactions for at least one part to be installed on a vehicle associated with a user, using a communication network, comprising:
means for entering vehicle data comprising information relating to the vehicle on which the at least one part is to be installed;
means for displaying matching parts data representing parts that are compatible with the vehicle represented by the entered vehicle data;
means for selecting at least one desired part from the displayed matching parts data;
means for displaying installation facility data indicative of at least one candidate facility at which the at least one desired part can be installed on the vehicle;
means for selecting a facility at which a user wishes to have the at least one desired part installed on the vehicle, from the displayed installation facility data; and
means for displaying a service charge for installing each of the at least one desired part on the vehicle.

13. A server computer for effecting electronic commercial transactions for parts to be installed on a vehicle, using a communication network, comprising:
means for transmitting, to a user terminal, installation facility data indicative of at least one candidate facility at which the parts can be installed on the vehicle, and service charge data indicative of a service charge for installing each of the parts on the vehicle; and
means for receiving, from the user terminal, desired parts data indicative of at least one desired part that is requested by a user to be installed on the vehicle, and desired facility data indicative of a facility at which the user wishes to have the at least one desired part installed on the vehicle.

14. A server computer according to claim 13, further comprising:
means for receiving, from the user terminal, vehicle data comprising information relating to the vehicle on which the parts are to be installed; and
means for transmitting matching parts data representing parts that are compatible with the vehicle represented by the vehicle data.

15. A user terminal for effecting electronic commercial transactions for parts to be installed on a vehicle, using a communication network, comprising:
means for entering at least one desired part that is requested by a user to be installed on the vehicle;
means for displaying installation facility data indicative of at least one candidate facility at which the at least one desired part can be installed on the vehicle, and service charge data indicative of a service charge required for installing each of the at least one desired part on the vehicle; and
means for selecting a facility at which the user wishes to have the at least one desired part installed on the vehicle, from the at least one candidate facility represented by the installation facility data.

16. A user terminal according to claim 15, further comprising:
means for entering vehicle data comprising information relating to the vehicle on which the parts are to be installed; and
means for displaying matching parts data representing parts that are compatible with the vehicle represented by the entered vehicle data.
